# EUROPEAN PATENT APPLICATION

(11) **EP 1 447 704 A1**
(43) Date of publication of application: **18.08.2004**
(21) Application number: 02778003.0
(22) Date of filing: 30.10.2002
(51) Int. Cl.: G02B 27/22

(54) **THREE−DIMENSIONAL DISPLAY METHOD AND DEVICE THEREFOR**

(30) Priority: 02.11.2001 JP 2001337309
(71) Applicant: Japan Science and Technology Agency, Kawaguchi-shi, Saitama 332-0012 (JP)
(72) Inventor: TAKAKI, Yasuhiro, Kawasaki-shi, Kanagawa 215-0003 (JP)
(74) Representative: Hoarton, Lloyd Douglas Charles
(86) International application number: PCT/JP2002/011268
(87) International publication number: WO 2003/038506

(57) **Abstract**

A three-dimensional display method and a device therefor are provided in which a number of images can be displayed in the horizontal direction while image discontinuity can be eliminated by providing overlaps of display angular ranges between images having adjacent horizontal display directions.

A number of images are displayed in horizontal and vertical directions so that the display directions do not agree with each other, and by expanding vertical display angular ranges of entire images with a vertical diffuser (17), a vertical display angular range common to the entire images is produced. In this common vertical display angular range, the entire images have different horizontal display directions. Thereby, a number of images can be displayed because image sources can be arranged also in the vertical direction in addition to the horizontal direction.

## Description

### Technical Field

The present invention relates to a three-dimensional display method and a device therefor, and in particular relates to a three-dimensional display method and a device therefor in that a plurality of images different in display directions are generated in horizontal and vertical directions, so that a number of images different in horizontal display directions are generated by expanding a display angular range of each image only in the vertical direction with a vertical diffuser (one-dimensional diffuser).

### Background Art

Human physiological factors of three-dimensional vision include binocular parallax, accommodation, vergence, and motion parallax. By satisfying these entire factors, a natural three-dimensional display is enabled.

As is understood from that a human has a pair of eyes, among the physiological factors of three-dimensional vision, the most influencing factor on three-dimensional perception is the binocular parallax in which three-dimensional information is obtained from differences in two images in the horizontal directions viewed from the pair of eyes.

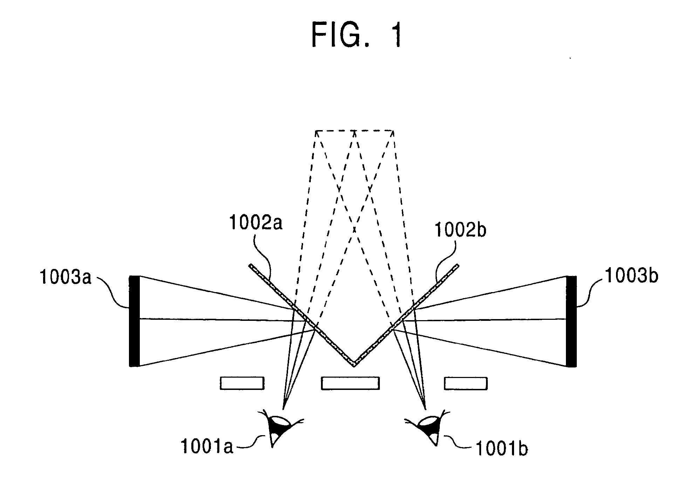

Therefore, as a three-dimensional display system, a binocular stereoscopic display system shown in Fig. 1 has been used from long ago. In Fig. 1, reference numerals 1001a and 1001b denote left and right eyes; numerals 1002a and 1002b mirrors for the left and right eyes; and numerals 1003a and 1003b two-dimensional displays for the left and right eyes. Images of the two-dimensional displays 1003a and 1003b are displayed corresponding to the left and right eyes 1001a and 1001b.

This stereoscopic display system has the following problems. In order that the left and right eyes 1001a and 1001b can see respective different images, a special pair of glasses need to be put on. Also, when the head is moved, the image of an object does not change, i.e., so-called motion parallax is not obtained. The human eyes are focused not on a presented position of a three-dimensional object but on the surfaces of the two-dimensional displays 1003a and 1003b, so that this contradiction causes fatigue.

The three-dimensional display system capable of solving the problems of the binocular stereoscopic display system described above is a multi-view three-dimensional display system.
This is a system in that a number of images viewed from a number of directions are simultaneously displayed in corresponding directions, and a special pair of glasses is not necessary to be put on. When the head is moved, the image of an object changes, so that the motion parallax is obtained. Simultaneous observation is enabled by multiple persons. Furthermore, if the number of viewing points is increased to be 50 to 100, when the head is moved, the image of an object is smoothly switched, achieving the smooth motion parallax. Moreover, since rays are converged on a presented position of a three-dimensional object, it is known that human eyes can focus on the presented position of the three-dimensional object so that the fatigue as in the stereoscopic display system is eliminated.

In the multi-view three-dimensional display system, a configuration is used in that an image changes only in the horizontal direction. This is based on the fact that since human eyes are aligned in the horizontal direction, image-changes in the horizontal direction are particularly important in human three-dimensional perception. When the image changes are limited to the horizontal direction, the number of images to be displayed is decreased, simplifying a device.
Therefore, there is an advantage that the amount of data during transmission and recording of three-dimensional images can be decreased.

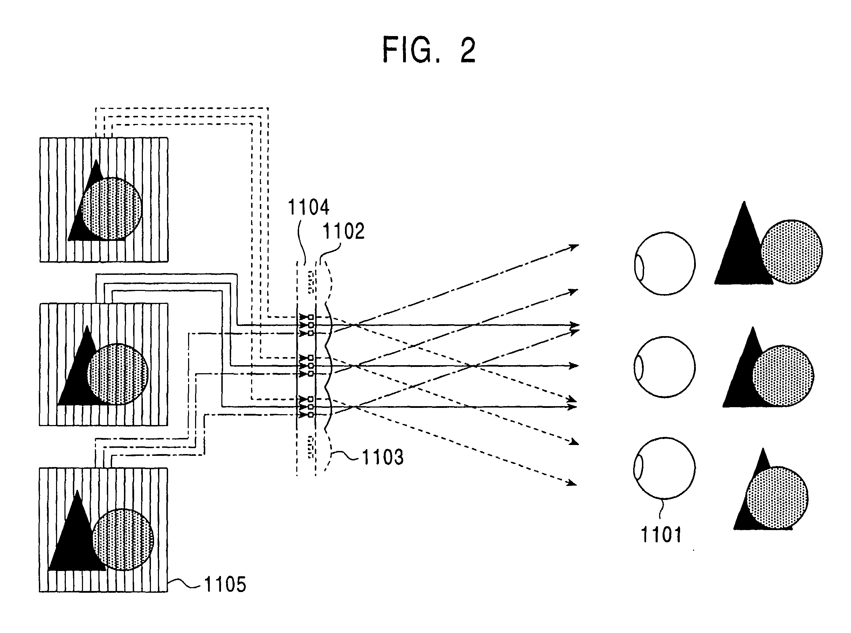

Fig. 2 is a schematic view of a conventional device realizing the multi-view three-dimensional display system. In the drawing, reference numeral 1101 denotes an eye; numeral 1102 a lenticular sheet; numeral 1103 a cylindrical lens constituting the lenticular sheet; numeral 1104 a two-dimensional display device; and numeral 1105 a parallax image.

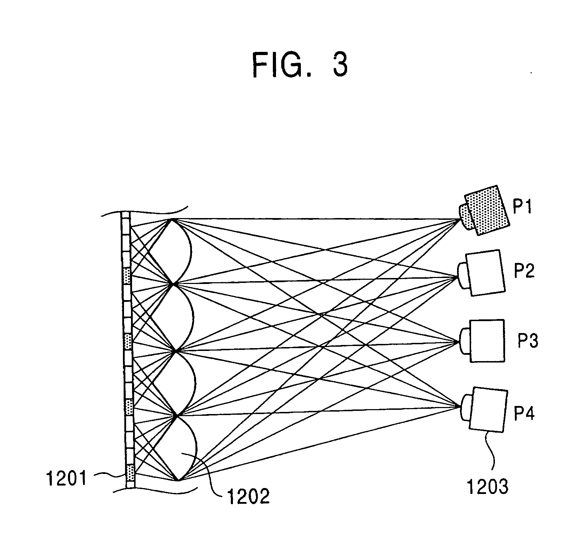

Fig. 3 is a schematic view of a device realizing the multi-view three-dimensional display system with a configuration different from that of Fig. 2. In the drawing, reference numeral 1201 denotes a reflection-type diffuser; numeral 1202 a lenticular sheet; and numeral 1203 a two-dimensional display.

In the description below, the simply mentioned two-dimensional display means a self-emitting display, such as a liquid crystal display panel with a back light. The transmission-type two-dimensional display which will be mentioned below means a device for displaying an image by two-dimensionally modulating transmittance of light, requiring an external light source, such as a liquid crystal display panel without a backlight. The two-dimensional image projector which will be mentioned below means a device for imaging an image in mid air or on a screen outside the device without having a display plane within the device, such as a video projector.

As shown in Figs. 2 and 3, as the multi-view three-dimensional display system, a method using the lenticular sheets 1102 and 1202 is known in which the cylindrical lenses 1103, which are one-dimensional lenses, are aligned in one direction. The principle of this lenticular method will be described below.

As shown in Fig. 2, a plurality of the parallax images 1105 of an object viewed from various horizontal directions are respectively divided into longitudinal strips, which are interleaved and reconstituted so as to display them on the two-dimensional display 1104. When a set of strip images are arranged so as to correspond to one cylindrical lens, the respective parallax images 1105 are displayed in different horizontal directions, so that from the left and right eyes, different parallax images can be seen. Also, when the eyes are moved, parallax images in sight are switched.

As a method for displaying three-dimensional images as moving and color images, a method is known using the conventional two-dimensional image display 1104, such as a liquid crystal display panel.

As shown in Fig. 3, on the back surface of the lenticular sheet 1202, the reflection-type diffuser 1201 is attached, so that different images can also be displayed in different horizontal directions by projecting images from different horizontal directions with a plurality of the two-dimensional displays 1203. When a conventional video projector is used as the two-dimensional display 1203, three-dimensional images can be displayed as moving and color images.

As described above, in a lenticular method, the lenticular sheets 1102 and 1202 are arranged so as to make cylindrical lenses be aligned in the horizontal direction.

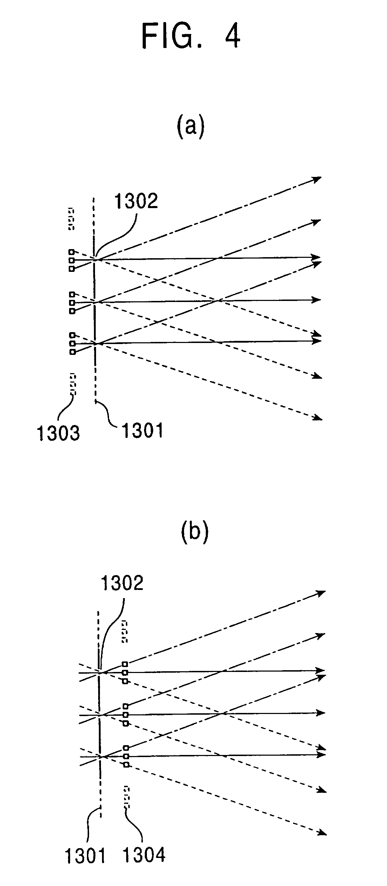

As a method similar to the lenticular method, a parallax barrier method shown in Fig. 4 is known. In the drawing, reference numeral 1301 denotes a slit array called as a parallax barrier; numeral 1302 an individual slit; numeral 1303 a two-dimensional image display; and numeral 1304 a transmission-type two-dimensional display.

Fig. 4(a) shows a schematic view of a horizontal section, and the individual slits 1302 constituting the parallax barrier 1301 have a function to change the direction of rays in the same way as in the individual cylindrical lenses constituting the lenticular sheet in the lenticular method.

Fig. 4(b) shows a schematic view of a horizontal section when the transmission-type two-dimensional display 1304 is used, and the transmission-type two-dimensional display 1304 is illuminated with light diverging in horizontal directions after passing the parallax barrier 1301. Three-dimensional images can be displayed as moving and color images using a transmission-type liquid crystal display panel as the transmission-type two-dimensional display.

### Disclosure of Invention

As described above, in the multi-view three-dimensional display system, if the number of images displayed in different horizontal directions is large enough (about 50 to 100), the four human physiological factors of three-dimensional perception can be entirely satisfied so as to display natural three-dimensional images.

However, when displaying moving and color images is assumed, in a method in that a lenticular screen is attached to the two-dimensional display, the number of images capable of being displayed is limited by the horizontal resolution of the two-dimensional display. Therefore, the smooth motion parallax cannot be obtained so as to produce image discontinuity, while there has been a problem of fatigue due to the contradiction between the eye focused position and the displayed position of a three-dimensional object. In order to increase the number of images, it is required to have a two-dimensional display with a very high resolution in the horizontal direction in comparison with the vertical direction, and it has been difficult to be achieved. In a method in that images are projected on a reflection-type lenticular screen with projectors, a number of the projectors are required so that there has been a problem of a large scale device.

By solving the problems described above, it is an object of the present invention to provide a three-dimensional display method and a device therefor capable of displaying more plenty of images in horizontal direction as well as being capable of eliminating image discontinuity by producing horizontal display angular-range overlaps between images having adjacent horizontal display directions.

According to the present invention, in order to achieve the object described above:
(1) A three-dimensional display method includes the steps of two-dimensionally arranging a plurality of image sources in horizontal and vertical directions so as to differentiate their horizontal display directions; producing a vertical display angular range common to entire images by expanding the display angular ranges only in the vertical direction with a vertical diffuser so as to cancel differences in the vertical display directions and to enable a number of images different in horizontal display directions to be displayed; and making a display angular range overlap between adjacent images so as to enable the images to be smoothly switched.
(2) A three-dimensional display method includes the steps of two-dimensionally arranging a plurality of imaging systems in horizontal and vertical directions so as to generate a plurality of images different in horizontal and vertical display directions; and generating images different in horizontal display directions by the number of the imaging systems by expanding display angular ranges only in the vertical direction with a vertical diffuser.
(3) A three-dimensional display method includes the steps of generating a number of light rays proceeding in different vertical and horizontal directions by corresponding each individual lens to a two-dimensional light-source array as the individual lens of a two-dimensional lens array to be one pixel of three-dimensional display; and expanding display angular ranges only in the vertical direction with a vertical diffuser to generate images different in horizontal display directions by the entire two-dimensional lens array by the number of the light sources of the two-dimensional light-source array.
(4) A three-dimensional display includes an array of two-dimensional image projectors two-dimensionally arranged in horizontal and vertical directions; an array of apertures arranged on the image-producing side of the two-dimensional image projector array; a common lens arranged on the image-producing side of the aperture array; a vertical diffuser arranged on the image-producing side of the common lens; and an image plane generated in the vicinity of the vertical diffuser, wherein a number of images different in horizontal display directions are produced.
(5) A three-dimensional display includes an array of two-dimensional displays two-dimensionally arranged in horizontal and vertical directions; an array of lenses arranged on the image-producing side of the two-dimensional display array; an array of apertures arranged on the image-producing side of the lens array; a common lens arranged on the image-producing side of the aperture array; and a vertical diffuser arranged on the image-producing side of the common lens; and an image plane generated in the vicinity of the vertical diffuser, wherein a number of images different in horizontal display directions are produced.
(6) A three-dimensional display includes an array of illumination optical systems two-dimensionally arranged in horizontal and vertical directions; an array of transmission-type two-dimensional displays arranged on the image-producing side of the illumination optical system array; an array of lenses arranged on the image-producing side of the transmission-type two-dimensional display array; a common lens arranged on the image-producing side of the lens array; a vertical diffuser arranged on the image-producing side of the common lens; and an image plane generated in the vicinity of the vertical diffuser on the image-producing side, wherein a number of images different in horizontal display directions are produced.
(7) A three-dimensional display includes an array of illumination optical systems two-dimensionally arranged in horizontal and vertical directions; an array of transmission-type two-dimensional displays arranged on the image-producing side of the illumination optical system array; an array of lenses arranged on the image-producing side of the transmission-type two-dimensional display array; an array of apertures arranged on the image-producing side of the lens array; a common lens arranged on the image-producing side of the aperture array; a vertical diffuser arranged on the image-producing side of the common lens; and an image plane generated in the vicinity of the vertical diffuser on the image-producing side, wherein a number of images different in horizontal display directions are produced.
(8) A three-dimensional display includes an array of light sources two-dimensionally arranged in horizontal and vertical directions; a micro-lens arranged on the image-producing side of the light source array; and a vertical diffuser arranged on the image-producing side of the micro-lens so as to construct a pixel, and a display plane is made of a two-dimensional array of the pixels, wherein a number of images different in horizontal display directions are produced.
(9) A three-dimensional display includes an array of light sources two-dimensionally arranged in horizontal and vertical directions; a pinhole arranged on the image-producing side of the light source array; and a vertical diffuser arranged on the image-producing side of the pinhole so as to construct a pixel, and a display plane is made of a two-dimensional array of the pixels, wherein a number of images different in horizontal display directions are produced.
(10) A three-dimensional display includes a diverging light source; an array of transmission-type light modulators arranged on the image-producing side of the diverging light source; and a vertical diffuser arranged on the image-producing side of the transmission-type light modulator array so as to construct a pixel, and a display plane is made of a two-dimensional array of the pixels, wherein a number of images different in horizontal display directions are produced.

### Brief Description of the Drawings

Fig. 1 is an explanatory drawing of a conventional binocular stereoscopic display system.
Fig. 2 is a block diagram of a conventional device realizing a multi-view three-dimensional display system using a lenticular sheet.
Fig. 3 is a block diagram of a conventional device realizing a multi-view three-dimensional display system using a reflection-type lenticular sheet.
Fig. 4 is a block diagram of a conventional device realizing a multi-view three-dimensional display system using a parallax barrier.
Fig. 5 is an explanatory drawing of two-dimensional arrangement of display angular ranges of image sources and high-density image generation in the horizontal direction realized by the enlargement of vertical display angular ranges, showing a principle of the present invention.
Fig. 6 is a block diagram (No. 1) of a three-dimensional display showing a first embodiment of the present invention.
Fig. 7 is a block diagram (No. 2) of the three-dimensional display showing the first embodiment of the present invention.
Fig. 8 is an explanatory drawing of display directions in a multiple imaging system according to the first embodiment of the present invention.
Fig. 9 is an explanatory drawing of a display angular range according to the first embodiment of the present invention.
Fig. 10 is a block diagram in the vicinity of two-dimensional displays of a modification of the three-dimensional display, showing the first embodiment of the present invention.
Fig. 11 is an explanatory drawing of the function of the lenticular sheet.
Fig. 12 is a block diagram of a three-dimensional display showing a second embodiment of the present invention.
Fig. 13 is an explanatory drawing of display directions with a micro-lens according to the second embodiment of the present invention.
Fig. 14 is an explanatory drawing of display angular ranges according to the second embodiment of the present invention.
Fig. 15 is a block diagram in the vicinity of a light-source array of a modification of the three-dimensional display showing the second embodiment of the present invention.

### Best Mode for Carrying Out the Invention

Embodiments of the present invention will be described below in detail.

At first, terms, which will be used in the description below, are described. An emitting angle of ray emitted from an image display plane is called as a display angle; when the emitting angle of ray is limited within a certain angular range, this angular range is called as a display angular range; wherein the emitting angle is to be measured from the normal line of an image plane. That is, when the image plane is viewed, an image can be viewed only within the display angular range. The central direction of the display angular range is called as a display direction. Also, a two-dimensional display and a light source array used for image display are collectively called as an image source.

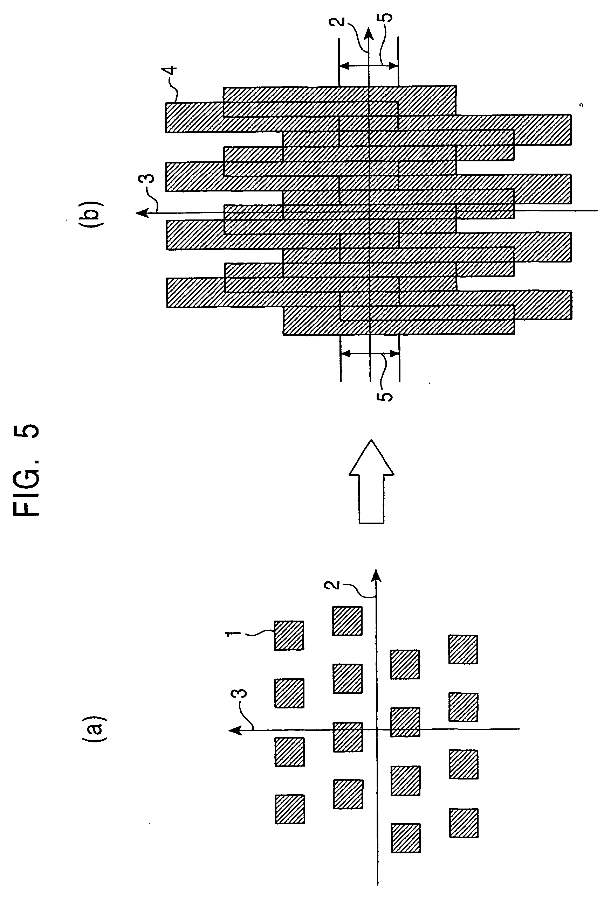

Fig. 5 is an explanatory drawing of two-dimensional arrangement of display angular ranges of a plurality of image sources and high-density image generation in the horizontal direction realized by the enlargement of vertical display angular ranges, showing a principle of the present invention; Fig. 5(a) shows the two-dimensional arrangement of the display angular ranges of the image sources; and Fig. 5(b) shows that a common vertical display angular range is generated by expanding the vertical display angular ranges.

In these drawings, reference numeral 1 denotes a display angular range of an image; numeral 2 a horizontal display angle; numeral 3 a vertical display angle; numeral 4 a display angular range of each image expanded in the vertical direction; and numeral 5 a common vertical display angular range.

In the past, in order to display images different in horizontal display directions, image sources were aligned only in the horizontal direction. According to the present invention, by arranging the image sources in the vertical direction in addition to the horizontal direction, a number of the image sources can be arranged. When the image sources are two-dimensionally arranged, which will be described later in description of the embodiment, the display angular ranges of images are also distributed two-dimensionally. Wherein, the entire images are arranged so as to be different in horizontal display directions.

For example, the image sources are two-dimensionally arranged so that the display angular range of each image is to be as shown in Fig. 5(a). Because the image sources are also arranged in the vertical direction, the discrepancy between the vertical display directions of images becomes a problem; however, using a vertical diffuser (not shown) that diffuses light only in the vertical direction, the vertical display angular range of each image is expanded so as to produce a vertical display angular range common to the entire images (common vertical display angular range) 5 as shown in Fig. 5(b). In this range, the entire images are displayed in different horizontal directions so that the same effect can be obtained as that when the entire image sources are arranged in the horizontal direction. That is, in this vertical display angular range, when a viewing point is moved in the horizontal direction, the entire images can be observed, and further, each image has a different horizontal display direction.

Specific examples will be described below in detail.

First, a configuration by multiplexing image planes will be described.

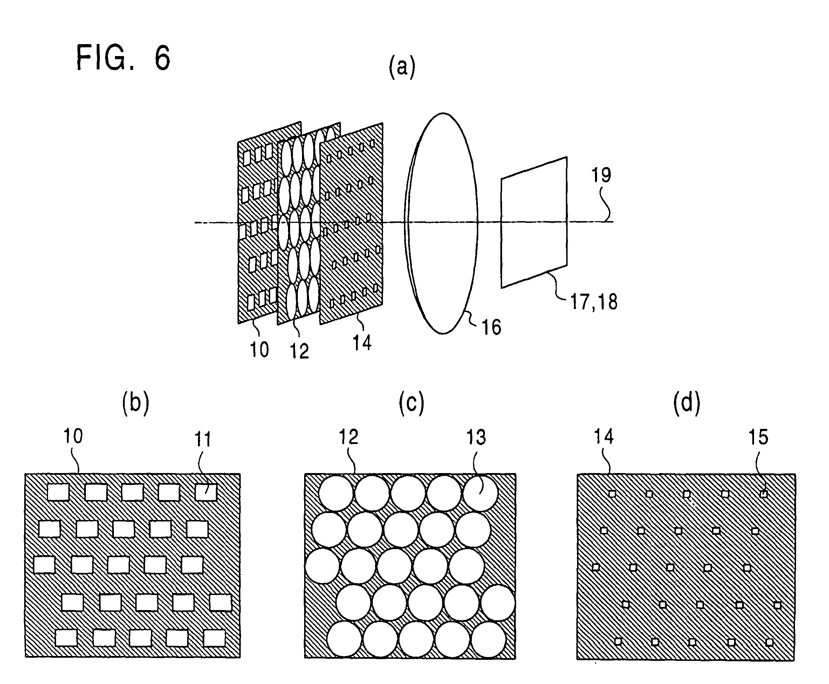

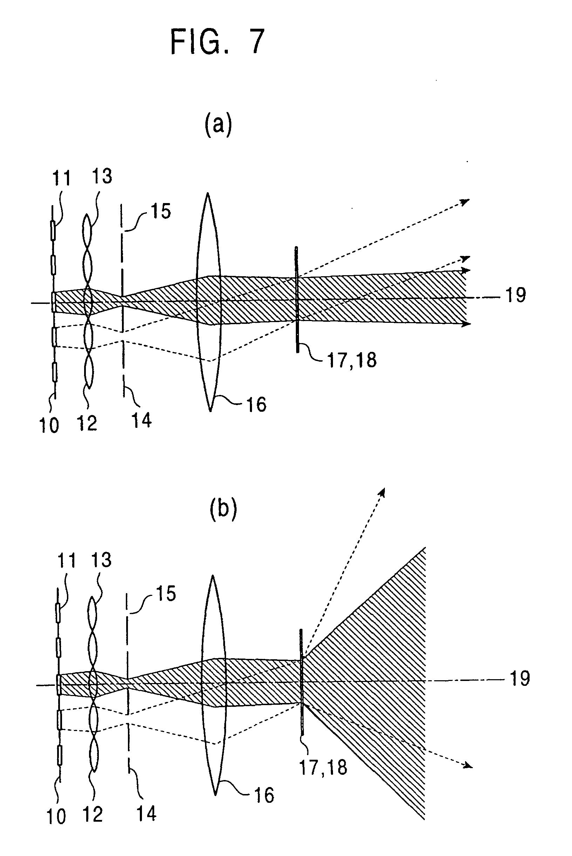

Fig. 6 is a block diagram (No. 1) of a three-dimensional display showing a first embodiment of the present invention; Fig. 6(a) is an overall schematic view; Fig. 6(b) is a plan view of its two-dimensional display array; Fig. 6(c) is a plan view of its lens array; and Fig. 6(d) is a plan view of its aperture array. Also, Fig. 7 is a block diagram (No. 2) of the three-dimensional display showing the first embodiment of the present invention; Fig. 7(a) is a schematic view showing its horizontal section; and Fig. 7(b) is a schematic view showing its vertical section.

In these drawings, reference numeral 10 denotes a two-dimensional display array; numeral 11 each individual two-dimensional display; numeral 12 a lens array; numeral 13 each lens; numeral 14 an aperture array; numeral 15 each aperture; numeral 16 a common lens; numeral 17 a vertical diffuser; numeral 18 a common image plane; and numeral 19 an optical axis.

According to the embodiment, image planes are multiplexed. That is, imaging systems are two-dimensionally arranged so as to generate a plurality of images different in display horizontal and vertical directions and to cancel differences in vertical display directions with the vertical diffuser 17. By arranging imaging systems so that entire images have different horizontal display directions, images different in horizontal display directions can be generated by the number of the imaging systems.

In detail, as shown in Fig. 7(a) and Fig. 7(b), a plurality of afocal optical systems are multiplexed. In general, an afocal optical system is composed of two lenses; however, according to the embodiment, the optical systems are multiplexed using one common lens 16 as a common lens on the image side. The two-dimensional displays 11 are arranged on object planes of the respective afocal optical systems so as to display respective images. Images of the entire afocal optical systems are imaged at the same position on the common image plane 18. The images on the common image plane 18 are displayed in horizontal and vertical directions differently corresponding to positions of the afocal imaging systems relative to the optical axis 19.

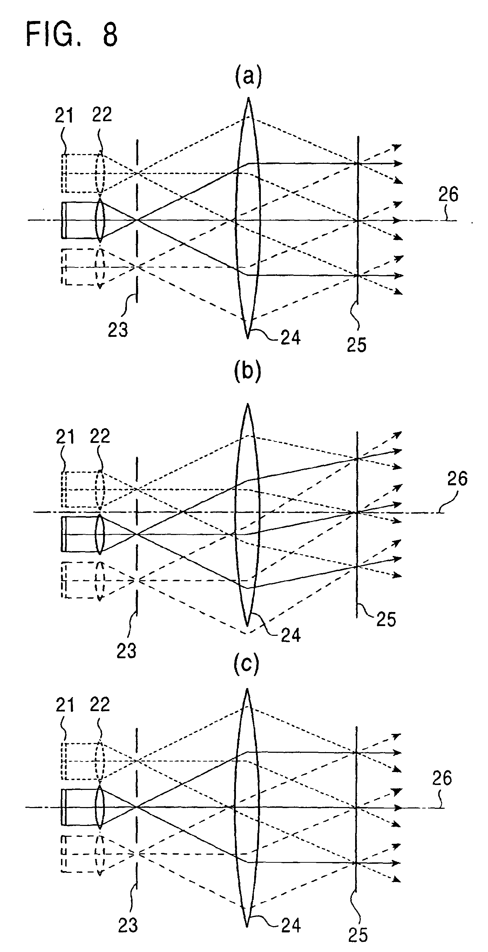

This is described with reference to Fig. 8. In the drawing, reference numeral 21 denotes a two-dimensional image display; numeral 22 a lens; numeral 23 an aperture array; numeral 24 a common lens; numeral 25 a common image plane; and numeral 26 an optical axis. Fig. 8(a) is a horizontally sectional schematic view of a multiple-imaging system showing that the position of the combination of the two-dimensional display 21 with the lens 22 relative to the optical axis 26 determines the horizontal display direction of the image on the common image plane 25.

Fig. 8(b) is a horizontally sectional view in a vertical position different from Fig. 8(a) showing that since the position of the combination of the two-dimensional display 21 with the lens 22 relative to the optical axis 26 is different from that in Fig. 8(a), images are displayed in the horizontal directions different from those of Fig. 8(a).

Fig. 8(c) is a vertically sectional schematic view of the multiple-imaging system showing that the vertical display direction is determined corresponding to the position of the combination of the two-dimensional display 21 with the lens 22 relative to the optical axis 26.

Wherein, the two-dimensional image generating devices 11, the lenses 13, and the apertures 15 constituting the afocal optical systems are two-dimensionally arranged so that entire images have different horizontal display directions. For example, these are two-dimensionally arranged as shown in Fig. 6(b) to Fig. 6(d). Furthermore, in the vicinity of the common image plane 18 of the multiple-imaging system, the vertical diffuser 17 expanding light only in the vertical direction is arranged.

By doing so, although the horizontal display angular ranges are not changed as shown in Fig. 7(a), the vertical display angular ranges of entire images are expanded as shown in Fig. 7(b), so that a display angular range common to the entire images is produced in the vertical direction. This corresponds to the common vertical display angular range 5 shown in Fig. 5(b), and in this angular range, when the viewing point is moved in the horizontal direction, the entire images can be observed. Furthermore, each image has a different display direction in the horizontal direction.

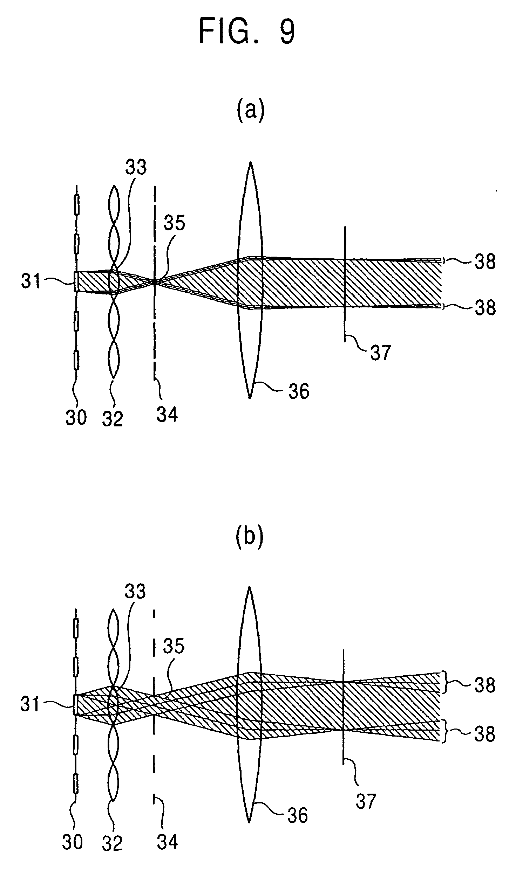

As shown in Fig. 9, an aperture array 34 arranged between a lens array 32 and a common lens 36 has a function to determine the display angular range of each image generated by the multiple imaging system. As shown in Fig. 9(a), in the case where each aperture 35 of the aperture array 34 is small, a display angular range 38 of an image generated by each individual afocal optical system is small.

As shown in Fig. 9(b), when the aperture 35 is expanded, the display angular range 38 becomes larger. In such a manner, since the size of the aperture 35 determines the display angular range 38 of an image, the distribution of the apertures in the aperture array 34 approximately agrees with the distribution of the display angular ranges shown in Fig. 5(a). In addition, reference numeral 31 denotes a two-dimensional display; numeral 33 each lens; and numeral 37 a common image plane.

That is, Fig. 6(d) agrees with Fig. 5(a). Therefore, when the aperture is small, between display angular ranges of images having adjacent horizontal display directions, discontinuity appears, so that when eyes are moved in the horizontal direction, a range where an image cannot be viewed is produced. This is called as image discontinuity. When the afocal optical systems are arranged only in the horizontal direction, no matter how large the aperture is expanded, it is a limit to bring a display angular range of an image into contact with that of the adjacent image, and an overlap cannot be produced therebetween.

Whereas, when the afocal optical systems are two-dimensionally arranged, as shown in Fig. 5(b), an overlap can be produced between display angular ranges of images having adjacent horizontal display directions, so that the image discontinuity can be eliminated, achieving smooth motion parallax.

Instead of arranging the aperture array 34 between the lens array 32 and the common lens 36, controlling an emitting angle of light emitted from the two-dimensional display 31 takes the same effect as that of the case where the aperture array 34 is provided.

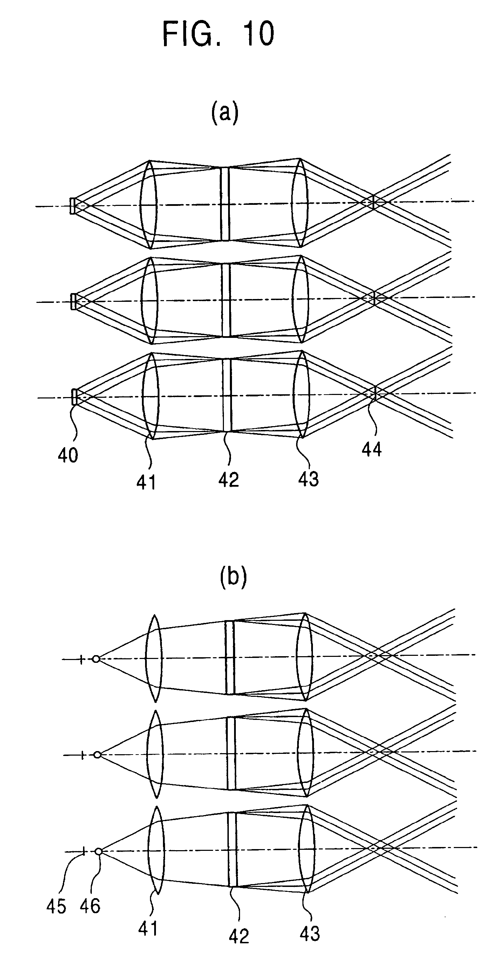

Fig. 10(a) shows a constitutive method using a surface-emitting light source 40, an illumination lens 41, a transmission-type two-dimensional display 42. In an imaging system including the illumination lens 41 and a lens 43, by forming an image 44 of the surface-emitting light source 40 at the same position and in the same size as those of the aperture 35 (see Fig. 9) of the aperture array 34 (see Fig. 9), an emitting angle of light emitted from the transmission-type two-dimensional image display 42 can be controlled. The surface-emitting light source 40 is also replaceable with the aperture in their combination.

Fig. 10(b) shows a constitutive method using a point light source 42, the illumination lens 41, and the transmission-type two-dimensional display 42. By arranging the point light source 46 at a position adjacent to the illumination lens 41 closer than a focal point 45 of the illumination lens 41 so as to illuminate the transmission-type two-dimensional display 42 with diverging light, an emitting angle of light emitted from the transmission-type two-dimensional display 42 can be controlled. The point light source 46 is also replaceable with the pinhole in their combination. The two constitutive methods described above may be combined.

Furthermore, these constitutive methods may be obviously combined with the aperture array. In addition to these, any one can be used as long as it can limit an emitting angle of light emitted from the two-dimensional display.

As a common lens of the multiple imaging system, a lens at least larger than the lens array is required. A Fresnel lens can be used therefor. The Fresnel lens is thin and light-weight in comparison with a spherical lens. Other than these lenses, a spherical mirror can be used, and in this case, an optical path of an optical system is folded with the spherical mirror so as to miniaturize the entire device.

As a two-dimensional display, a conventional two-dimensional display such as a liquid crystal display panel may be used. When a small-size liquid crystal display panel is used, a number of images can be two-dimensionally arranged, and moving and color images can be displayed. Other than these, any two-dimensional display may be used as long as it can generate two-dimensional images.

A small-size liquid crystal display panel may have a size of about 20 mm x 20 mm, for example. In this case, when they are arranged two-dimensionally according to the embodiment, even about 50 to 100 of panels are arranged, these panels may occupy only an area of about 140 mm x 140 mm to 200 mm x 200 mm. Whereas, when they are arranged only in the horizontal direction in such a conventional manner, a width of about 1000 mm to 2000 mm is necessary to be placed.

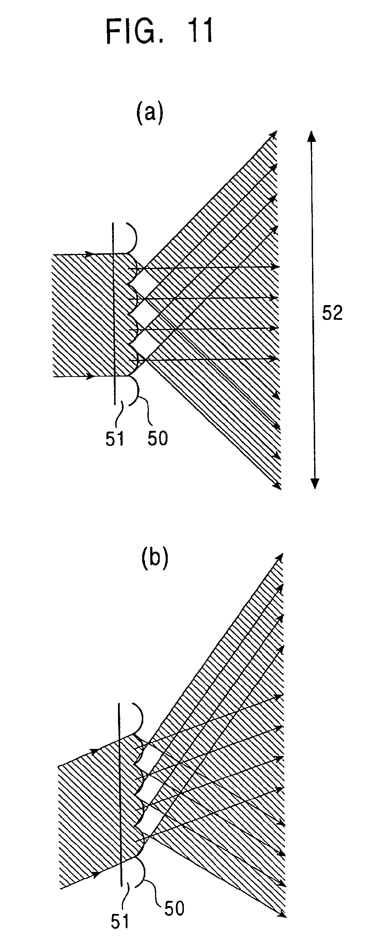

As a vertical diffuser, a lenticular sheet may be used. As shown in Fig. 11(a), when light enters a lenticular sheet 51 having cylindrical lenses 50, which are one-dimensional lenses, arranged thereon, the light is diffused only in an alignment direction 52 of the cylindrical lenses while not diffused in a direction perpendicular thereto.

As shown in Fig. 11(b), the lenticular sheet 51 one-dimensionally diffuses inclined incident light about its inclination as the center. Therefore, as shown in Fig. 5, the display angular range expands only in the vertical direction while maintaining the center of the display angular range of incident images. In addition to the lenticular sheet, a holographic optical element may be used as a vertical diffuser. Other than these, any one may be used as a vertical diffuser as long as it diffuses light only in the vertical direction (one direction).

The present invention is featured by the point that the lenticular sheets are arranged so that the cylindrical lenses are aligned in the vertical direction differently from a conventional lenticular method.

Since the multiple imaging system is an off-axis optical system, image distortion due to aberration may be produced. By optimally designing an optical system such as a lens, the image distortion can be suppressed by reducing the aberration. Additionally, it can also be corrected by conversely distorting two-dimensional images to be displayed on the two-dimensional display with an electrical technique.

In an afocal optical system composed of two lenses, the lenses are generally arranged so that focal planes of the lenses agree with each other, and an object and an image plane are arranged on the other focal planes of the two lenses.

When this is described with reference to Fig. 6 and Fig. 7, the focal plane of the lens 13 which constitute the lens array 12 and the focal plane of the common lens 16 agree with each other. On the other focal plane of the lens 13, the two-dimensional display array 11 is arranged while on the other focal plane of the common lens 16, the common image plane 18 is arranged. According to the embodiment, various imaging systems achieving the imaging relationship between the two-dimensional image display and the image plane may be additionally used.

As two-dimensional arrangement of afocal optical systems constituting the multiple imaging system, in addition to the two-dimensional arrangement shown in Fig. 6(b) to Fig. 6(d), various arrangements are enabled, in which horizontal positions of individual imaging systems do not agree with each other. The two-dimensional arrangement shown in Fig. 6(b) to Fig. 6(d) is arrangement designed in considering the fact that when the distance between the optical axis 19 of the multiple imaging system and each individual afocal optical system is increased, image distortion due to aberration increases. Although, in Fig. 6(b) to Fig. 6(d), the afocal optical systems are arranged in equal intervals for brevity, they are not necessarily arranged in equal intervals. In particular, for maintaining angular changes of images having adjacent horizontal display directions constant in the horizontal direction, it is preferable that the interval in the horizontal direction be rather increased with increasing distance to the periphery from the center.

Next, a second embodiment according to the present invention will be described.

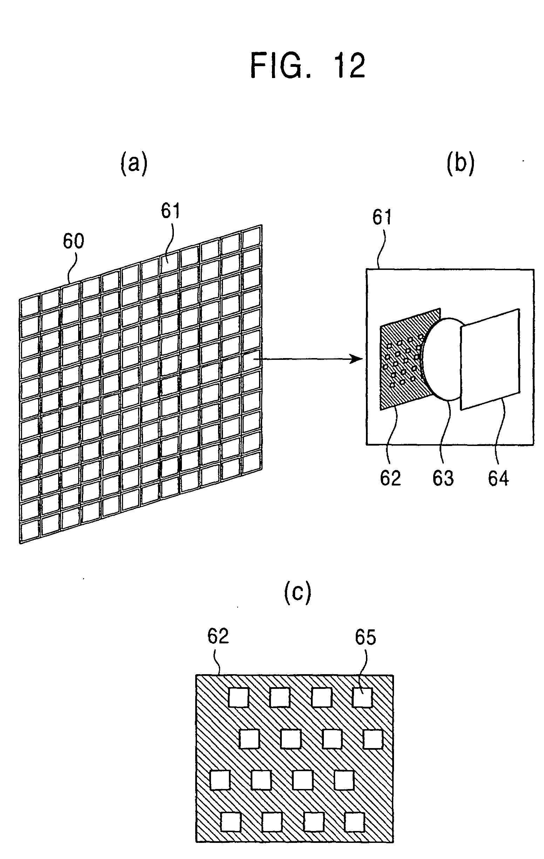

Fig. 12 is a block diagram showing the second embodiment according to the present invention; Fig. 12(a) is a schematic view of a display plane; Fig. 12(b) a schematic view showing the structure of one pixel on the display plane; and Fig. 12(c) a plan view of the light source array. In these drawings, reference numeral 60 denotes a display plane; numeral 61 one pixel on the display plane 60; numeral 62 the light source array; numeral 63 a micro-lens; numeral 64 a vertical diffuser; and numeral 65 a light source.

In this embodiment, a configuration by pixel-level multiplexing will be described.

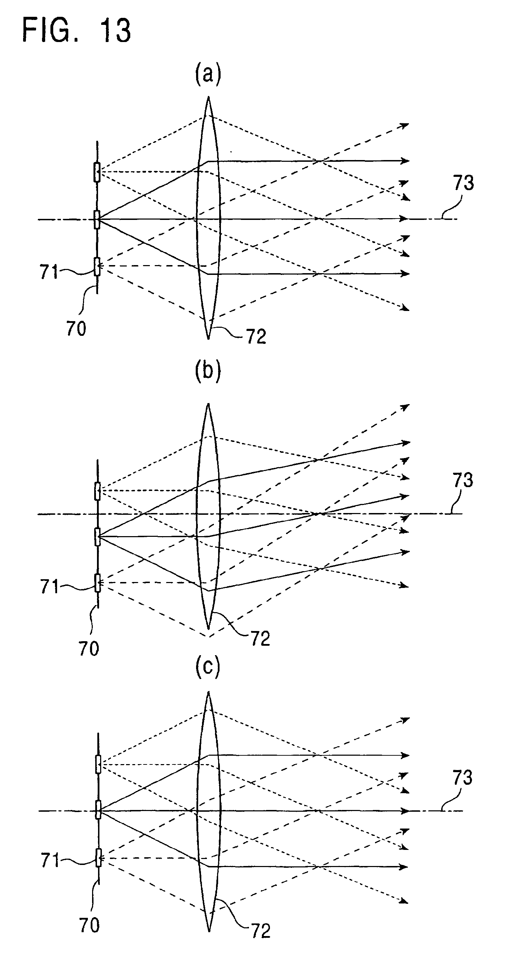

Wherein, using a micro-lens array, each micro-lens 63 is used as one pixel of the three-dimensional display. On the focal plane of each micro-lens 63, a two-dimensionally arranged light-source array 62 is provided. A ray emitted from each light source 65 constituting the light-source array 62 has proceeding vertical and horizontal directions corresponding to the position of the light source 65 relative to the micro-lens 63 after passing thorough the micro-lens 63. This will be described with reference to Fig. 13.

Fig. 13(a) is a schematic view illustrating a horizontal sectional view of one pixel, showing that the position of a light source 71 relative to an optical axis 73 of a micro-lens 72 determines a horizontal proceeding direction of light after passing through the lens. Fig. 13(b) is a horizontal sectional view at a vertical position different from Fig. 13(a), showing that since the positions of the light sources 71 relative to the optical axis 73 are different from those in Fig. 13(a), the horizontal proceeding directions of the light are different from those in Fig. 13(a). Fig. 13(c) is a vertical sectional view showing that the position of the light source 71 relative to the optical axis 73 determines a vertical proceeding direction of the light.

Wherein, the two-dimensional arrangement of the light sources 71 of a light-source array 70 is determined so that light rays from the entire light sources have different horizontal directions. For example, the light sources are arranged as shown in Fig. 12(c). Then, when the light proceeding direction is expanded with a vertical diffuser 64 only in the vertical direction, a vertical proceeding direction range common to rays from the entire light sources is produced.

In this common vertical proceeding direction range, rays from light sources have horizontal proceeding directions different from each other. That is, the rays emitted from the micro-lens can be controlled by corresponding to their horizontal proceeding directions. When each individual micro-lens is used as one pixel of the three-dimensional display so as to display the entire screen with the entire micro-lens arrays, images can be displayed differently corresponding to the light horizontal proceeding direction. That is, in the entire display plane 60, a light source group located at the same relative position within the all light-source arrays 62 produces an image in one horizontal display direction. That is, images can be displayed by the number of light sources constituting the light-source array 62.

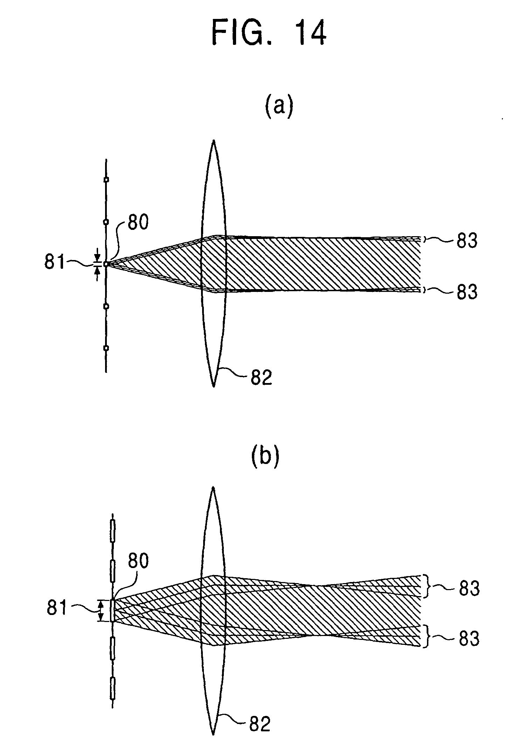

The horizontal width of the light source 65 constituting the light-source array 62 determines the display angular range of the corresponding image. This will be described with reference to Fig. 14.

As shown in Fig. 14(a), when a horizontal width 81 of a light source 80 is small, a display angular range 83 of each image is small. As shown in Fig. 14(b), when the horizontal width 81 of the light source 80 is increased, the display angular range 83 of each image is increased. In the drawing, reference numeral 82 denotes a micro-lens.

In such a manner, the size of the light source 80 determines the display angular range 83 of each image, so that the distribution of light sources in the light-source array 62 approximately determines the distribution of display angular ranges shown in Fig. 5(a). That is, Fig. 12(c) agrees with Fig. 5(a). Therefore, when each horizontal width 81 is small, between display angular ranges of images having adjacent horizontal directions, image discontinuity appears, so that when a view point is moved in the horizontal direction, a range where an image can not be viewed is produced.

As in the lenticular method, when light sources of a light-source array are arranged only in the horizontal directions, it is a limit to bring a display angular range of an image into contact with that of the adjacent image, and an overlap cannot be generated therebetween. Whereas, according to the embodiment, when the light source arrays are two-dimensionally arranged, as shown in Fig. 5(b), an overlap can be generated between display angular ranges of images having adjacent horizontal display directions, so that the image discontinuity can be eliminated, achieving smooth motion parallax.

In the description with reference to Fig. 12, the light-source array 62 is located on the focal plane of the micro-lens 63. However, since the function of the micro-lens 63 is to change the light proceeding direction, even if the light-source array 62 is located at a position other than the focal plane, the light proceeding direction is changed, so that the position where the light-source array 62 is arranged is not limited to the focal plane of the micro-lens 63.

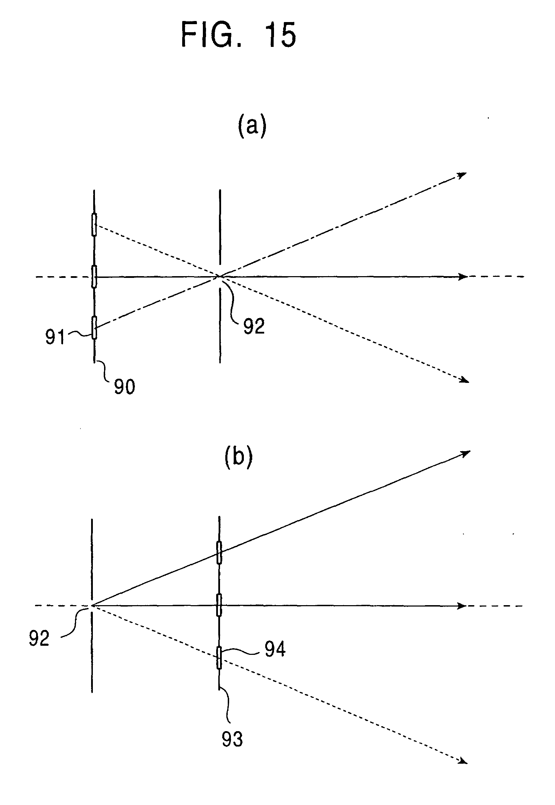

Also, in addition to the micro-lens, as shown in Fig. 15, the light proceeding direction can be changed using a pinhole 92. As shown in Fig. 15(a), by arranging a pinhole 92 at a position on an emitting side of a light-source array 90, the proceeding direction of the emitted light after passing through the pinhole 92 is determined corresponding to the relative position of a light source 91 in the light-source array 90.

Furthermore, as shown in Fig. 15(b), using a light modulator array 93 instead of the light-source array 90, providing the pinhole 92 at a position on the incident side of the light modulator array 93 also achieves the same function. Wherein, the light modulator is an element capable of controlling the transmittance of light. The proceeding direction of light emitted from each light modulator 94 is determined by the relative position of the light modulator 94 in the light modulator array 93. In this case, a point light source may also be used instead of the pinhole. In addition to the micro-lens and the pinhole, any one may be used as long as it can change the light proceeding direction.

As the two-dimensional arrangement of light sources in the light-source array, other than the arrangement shown in Fig. 12(c), various arrangements can be made if the horizontal position of each light source does not agree with each other. In Fig. 12(c), the light sources are shown for brevity to be the arrangement in equal intervals in the horizontal and vertical directions; however, it is not necessarily in equal intervals. In particular, for maintaining angular changes of images having adjacent horizontal display directions constant in the horizontal direction, it is preferable that the interval in the horizontal direction be rather increased with increasing distance to the periphery from the center. For colorizing three-dimensional images according to the embodiment, the same technique as in a conventional two-dimensional display may be used. For example, methods may be used, such as a method using light sources of the three RGB primary colors as one light source together and a method of combining three light-source groups individually prepared corresponding to the three RGB primary colors with half mirrors.

According to the embodiment, a light-source array group may be substituted for the two-dimensional display. In this case, moving and color images can be easily displayed. One pixel of the two-dimensional display is corresponded to one light source. However, the two-dimensional display is required to have a unique pixel arrangement as shown in Fig. 12(c), for example. In a general two-dimensional display, an orthogonal pixel arrangement is used, and this pixel arrangement may be inclined for use or may be optically converted with an optical element. According to the embodiment, it is not necessary to arrange pixels in high density only in the horizontal direction as in a conventional lenticular method, and the pixels may be two-dimensionally arranged in equal densities. As a two-dimensional display, a high-resolution liquid crystal display panel may be used.

Instead of two-dimensionally arranging the light-source array group in practice, spatial scanning of light sources with a scanning optical system may have the same effect as that in the two-dimensional arrangement of light sources. As a scanning method, there are methods such as a method in which one or a plurality of light sources are two-dimensionally scanned in the horizontal and vertical directions, a method in which an one-dimensional light-source array arranged in the vertical direction or a two-dimensional light-source array is one-dimensionally scanned in the horizontal direction, and a method in which an one-dimensional light-source array arranged in the horizontal direction or a two-dimensional light-source array is one-dimensionally scanned in the vertical direction.

As a vertical diffuser (one-direction diffuser), a lenticular sheet and a holographic optical element may be used. Other than these, any one may be used as long as it diffuses light in one direction.

The lens array and the vertical diffuser may be replaced with an integrated element having a combined function of those of the both elements.

Although the present embodiment is identical to a conventional lenticular method or IP method in that both use a lens array and a light-source array, it is apparently different therefrom in that light sources constituting a light-source array are two-dimensionally arranged so that the horizontal positions do not agree with each other and in that the vertical display angular ranges are expanded using a one-dimensional diffuser so as to merge with each other.

In addition, the present invention is not limited to the embodiments described above, and various modifications can be made based on the spirit of the present invention, which must not be barred out of the scope of the invention.

As described above in detail, there has been a problem of a conventional multi-view three-dimensional display in that a sufficient number of images cannot be displayed in the horizontal direction. Whereas, according to the present invention, the number of images to be displayed in the horizontal direction can be increased to a large degree. Therefore, the smooth motion parallax is achieved while the problem of inconsistency between the accommodation and convergence is solved.

Also, the display angular ranges of images having adjacent horizontal display directions can be overlapped with each other, eliminating image discontinuity occurred when a viewing point is moved.

Furthermore, moving and color images can be easily displayed.

### Industrial Applicability

The present invention is preferably incorporated in a three-dimensional display capable of increasing the number of images displayed in the horizontal directions to a large extent.

## Claims

1. A three-dimensional display method comprising the steps of:
two-dimensionally arranging a plurality of image sources in horizontal and vertical directions so as to differentiate their horizontal display directions;
producing a vertical display angular range common to entire images by expanding the display angular ranges only in the vertical direction with a vertical diffuser so as to cancel differences in the vertical display directions and to enable a number of images different in horizontal display directions to be displayed; and
making a display angular range overlap between adjacent images so as to enable the images to be smoothly switched.

2. A three-dimensional display method comprising the steps of:
two-dimensionally arranging a plurality of imaging systems in horizontal and vertical directions so as to generate a plurality of images different in horizontal and vertical display directions; and
generating images different in horizontal display directions by the number of the imaging systems by expanding display angular ranges only in the vertical direction with a vertical diffuser.

3. A three-dimensional display method comprising the steps of:
generating a number of light rays proceeding in different vertical and horizontal directions by corresponding each individual lens to a two-dimensional light-source array using each individual lens of a two-dimensional lens array as one pixel of three-dimensional display; and
expanding display angular ranges only in the vertical direction with a vertical diffuser to generate images different in horizontal display directions by the entire two-dimensional lens array by the number of the light sources of the two-dimensional light-source array.

4. A three-dimensional display comprising:
(a) an array of two-dimensional image projectors two-dimensionally arranged in horizontal and vertical directions;
(b) an array of apertures arranged on the image-producing side of the two-dimensional image projector array;
(c) a common lens arranged on the image-producing side of the aperture array;
(d) a vertical diffuser arranged on the image-producing side of the common lens; and
(e) an image plane generated in the vicinity of the vertical diffuser,
(f) wherein a number of images different in horizontal display directions are produced.

5. A three-dimensional display comprising:
(a) an array of two-dimensional displays two-dimensionally arranged in horizontal and vertical directions;
(b) an array of lenses arranged on the image-producing side of the two-dimensional display array;
(c) an array of apertures arranged on the image-producing side of the lens array;
(d) a common lens arranged on the image-producing side of the aperture array; and
(e) a vertical diffuser arranged on the image-producing side of the common lens; and
(f) an image plane generated in the vicinity of the vertical diffuser,
(g) wherein a number of images different in horizontal display directions are produced.

6. A three-dimensional display comprising:
(a) an array of illumination optical systems two-dimensionally arranged in horizontal and vertical directions;
(b) an array of transmission-type two-dimensional displays arranged on the image-producing side of the illumination optical system array;
(c) an array of lenses arranged on the image-producing side of the transmission-type two-dimensional display array;
(d) a common lens arranged on the image-producing side of the lens array;
(e) a vertical-diffuser arranged on the image-producing side of the common lens; and
(f) an image plane generated in the vicinity of the vertical-diffuser on the image-producing side,
(g) wherein a number of images different in horizontal display directions are produced.

7. A three-dimensional display comprising:
(a) an array of illumination optical systems two-dimensionally arranged in horizontal and vertical directions;
(b) an array of transmission-type two-dimensional displays arranged on the image-producing side of the illumination optical system array;
(c) an array of lenses arranged on the image-producing side of the transmission-type two-dimensional display array;
(d) an array of apertures arranged on the image-producing side of the lens array;
(e) a common lens arranged on the image-producing side of the aperture array;
(f) a vertical-diffuser arranged on the image-producing side of the common lens; and
(g) an image plane generated in the vicinity of the vertical-diffuser on the image-producing side,
(h) wherein a number of images different in horizontal display directions are produced.

8. A three dimensional display comprising:
(a) an array of light sources two-dimensionally arranged in horizontal and vertical directions;
(b) a micro-lens arranged on the image-producing side of the light source array; and
(c) a vertical diffuser arranged on the image-producing side of the micro-lens so as to construct a pixel, and a display plane is made of a two-dimensional array of the pixels; and
(d) wherein a number of images different in horizontal display directions are produced.

9. A three-dimensional display comprising:
(a) an array of light sources two-dimensionally arranged in horizontal and vertical directions;
(b) a pinhole arranged on the image-producing side of the light source array; and
(c) a vertical diffuser arranged on the image-producing side of the pinhole so as to construct a pixel, and a display plane is made of a two-dimensional array of the pixels,
(d) wherein a number of images different in horizontal display directions are produced.

10. A three-dimensional display comprising:
(a) a diverging light source;
(b) an array of transmission-type light modulators arranged on the image-producing side of the diverging light source; and
(c) a vertical diffuser arranged on the image-producing side of the transmission-type light modulator array so as to construct a pixel, and a display plane is made of a two-dimensional array of the pixels,
(d) wherein a number of images different in horizontal display directions are produced.
